# EUROPÄISCHE PATENTSCHRIFT

(11) **EP 1 407 932 B1**
(45) Veröffentlichungstag und Bekanntmachung des Hinweises auf die Patenterteilung: **22.02.2006**
(21) Anmeldenummer: 03019323.9
(22) Anmeldetag: 27.08.2003
(51) Int. Cl.: B60R 7/04

(54) **Konsoleinrichtung, insbesondere für ein Fahrzeug**
Console, particularly for a motor vehicle
Console, notamment pour un véhicule

(30) Priorität: 12.10.2002 DE 20215712 U
(43) Veröffentlichungstag der Anmeldung: 14.04.2004
(73) Patentinhaber: REUM GmbH & Co. Betriebs KG, 74736 Hardheim (DE)
(72) Erfinder:
(74) Vertreter: Maser, Jochen

(56) Entgegenhaltungen:
- EP-A- 0 982 192
- DE-A- 19 956 366
- US-A- 5 810 434

## Beschreibung

### TECHNISCHES GEBIET

Die vorliegende Erfindung betrifft eine Konsoleinrichtung, insbesondere für ein Fahrzeug, mit einem Gehäuse mit einer Grundplatte und einer um eine erste Drehachse drehbaren Deckelplatte und einem Ablagefach, das durch Schwenken der Deckelplatte um die erste Drehachse oberseitig zugänglich wird.

### STAND DER TECHNIK

Eine Konsoleinrichtung der eingangs genannten Art ist bekannt, vgl. z.B. die EP 982 192 A oder die US 5 810 434 A. Durch einfaches Umklappen der Deckelplatte ist das innerhalb der Konsoleinrichtung vorhandene Ablagefach zugänglich.

### DARSTELLUNG DER ERFINDUNG

Ausgehend von dem genannten Stand der Technik liegt der vorliegenden Erfindung die Aufgabe beziehungsweise das technische Problem zugrunde, eine Konsoleinrichtung der eingangs genannten Art anzugeben, die eine Zugänglichkeit des Ablagefachs in mehreren Positionen ermöglicht, eine dauerhaft zuverlässige Funktion gewährleistet und wirtschaftlich herstellbar ist.

Die erfindungsgemäße Konsoleinrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Konsoleinrichtung zeichnet sich demgemäß dadurch aus, dass das Ablagefach oberseitig und unterseitig offen zwischen der Grundplatte und der Deckelplatte vorhanden ist, eine erste Verriegelungseinrichtung vorhanden ist, die das Ablagefach lösbar an der Grundplatte verriegelt, die Grundplatte der Konsoleinrichtung um eine zweite Drehachse von einer Grundposition in eine Zwischenposition schwenkbar ist, eine zweite Verriegelungseinrichtung vorhanden ist, die das Ablagefach an der Deckelplatte lösbar verriegelt, die erste Verriegelungseinrichtung das Ablagefach in der Grundposition der Konsoleinrichtung mit der Grundplatte verriegelt und die zweite Verriegelungseinrichtung in der Grundposition der Konsoleinrichtung das Ablagefach mit der Deckelplatte entriegelt und eine Kopplungseinheit vorhanden ist, die bewirkt, dass beim Schwenken der Konsoleinrichtung von der Grundposition in die Zwischenposition die erste Verriegelungseinrichtung die Grundplatte mit dem Ablagefach entriegelt und die zweite Verriegelungseinrichtung die Deckelplatte mit dem Ablagefach verriegelt, sodass beim Weiterschwenken der Konsoleinrichtung um die zweite Drehachse von der Zwischenposition zu einer Endposition die Grundplatte obenseitig zu liegen kommt und das Ablagefach durch Schwenken der Grundplatte in entgegengesetzter Richtung geöffnet werden kann, wobei der Verriegelungs- und der Entriegelungsvorgang beim Zurückschwenken von der Zwischenposition zur Grundposition in umgekehrter Reihenfolge abläuft.

Die erfindungsgemäße Konsoleinrichtung wird bevorzugt als Mittelarmlehne eines Fahrzeugs eingesetzt. Die Nutzung des Staufachs ist in der Grundposition für den Fahrer und Beifahrer möglich und in der zweistufig erreichbaren Endposition durch die im Fond befindlichen Mitfahrer nutzbar. Die Nutzung für Fahrer und Beifahrer wird durch einfaches Schwenken der Deckenplatte ermöglicht. Zur Nutzung des Ablagefachs für die Fondpassagiere wird die Konsoleinrichtung zunächst bevorzugt um 110° (Altgrad) um die zweite Drehachse gedreht und anschließend die Deckelplatte mit verriegeltem Ablagefach um weitere 70° (Altgrad) um die erste Drehachse geschwenkt, wodurch das Ablagefach in der Endposition von oben her zugänglich ist.

Eine konstruktiv besonders einfache Ausgestaltung, die eine dauerhaft zuverlässige Funktion gewährleistet, zeichnet sich dadurch aus, dass die erste Verriegelungseinrichtung zumindest eine an der Grundplatte angeformte Vorsprungeinheit und zumindest eine an dem unteren Rand des Ablagefachs vorhandene L-förmige Ausnehmung mit einem senkrecht zum unteren Rand angeordneten offenen ersten Schenkel und einen parallel zum unteren Rand angeordneten zweiten Schenkel aufweist.

Eine weitere bevorzugte Ausgestaltung zeichnet sich dadurch aus, dass die zweite Verriegelungseinrichtung zumindest eine an der Deckelplatte angeformte Vorsprungeinheit und zumindest eine am oberen Rand des Ablagefachs vorhandene L-förmige Ausnehmung mit einem senkrecht zum oberen Rand angeordneten offenen ersten Schenkel und einem parallel zu dem oberen Rand angeordneten zweiten Schenkel aufweist.

Eine besonders vorteilhafte Weiterbildung, die eine zuverlässige Verrastung des Ablagefachs mit der Grundplatte beziehungsweise des Ablagefachs mit der Deckelplatte gewährleistet, zeichnet sich dadurch aus, dass an jeder unteren/oberen Längskante des Ablagefachs zwei erste/zweite Verriegelungseinrichtungen vorhanden sind.

Alternativ kann die erste und zweite Verriegelungseinrichtung jeweils als Rasteinheit mit Rastnut und entsprechender Rastnase ausgebildet sein.

Eine besonders bevorzugte Ausgestaltung, die sich konstruktiv besonders einfach umsetzen lässt, zeichnet sich dadurch aus, dass die Kopplungseinheit als Gelenkgestänge mit einem ersten Gelenkstab und einem zweiten Gelenkstab ausgebildet ist, wobei ein Ende des ersten Gelenkstabs an dem Ablagefach angeschlossen ist und das gegenüberliegende Ende des zweiten Gelenkstabs in einer Kurvenführung geführt ist, derart, dass beim Schwenken der Konsoleinrichtung von der Grundposition in die Zwischenposition und umgekehrt der erste Gelenkstab eine Verschiebung in seiner Längsrichtung erfährt, wodurch die erste Verriegelungseinrichtung entriegelt und die zweite zweite Verriegelungseinrichtung verriegelt wird und umgekehrt.

Dient das Ablagefach zur Lagerung von Getränken, ist bevorzugt eine Kühlvorrichtung an der Konsoleinrichtung vorhanden, die auf das Innere des Ablagefachs einwirkt.

In einer alternativen vorteilhaften Ausgestaltung weist das Ablagefach oberseitig einen separaten Deckel auf.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematischer Längsschnitt durch eine Konsoleinrichtung mit einem an einer Grundplatte verriegelten Ablagefach bei geschlossener Deckelplatte,
- Fig. 2: schematischer Längsschnitt durch die Konsoleinrichtung gemäß Fig. 1 bei geöffneter Deckelplatte,
- Fig. 3: schematischer Schnitt durch die Konsoleinrichtung gemäß Fig. 3 bei in die Zwischenposition geschwenkter Konsoleinrichtung und an der Deckelplatte verriegeltem Ablagefach,
- Fig. 4: schematischer Längsschnitt durch die Konsoleinrichtung gemäß Fig. 1 bei gegenüber Fig. 3 weiter geschwenkter Deckelplatte mit Ablagefach in Endposition,
- Fig. 5: schematische Detailperspektive in teilweise aufgeschnittenem Zustand der Konsoleinrichtung gemäß Fig. 1 und
- Fig. 6: schematische Detailperspektive in teilweise aufgeschnittenem Zustand der Konsoleinrichtung gemäß Fig. 3

### WEGE ZUM AUSFÜHREN DER ERFINDUNG

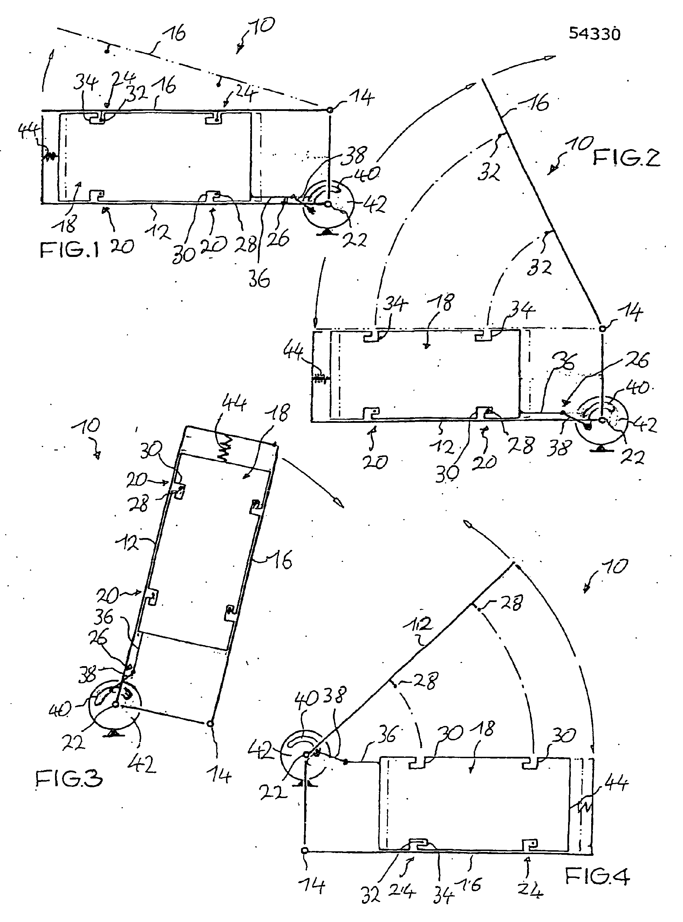

Eine in den Figuren dargestellte Konsoleinrichtung 10 ist als Mittelarmlehne für ein Fahrzeug ausgebildet.. Die Konsoleinrichtung 10 besitzt einen länglichen quaderförmigen Körper mit einer Grundplatte 12. Die Konsoleinrichtung 10 ist in ihren in Figur 1 rechten unteren Eckbereich an eine zweite Drehachse 22 drehbar angeschlossen. Oberseitig weist die Konsoleinrichtung 10 eine Deckelplatte 16 auf, die in Figur 1 im rechten oberen Eckbereich um eine erste Drehachse 14 drehbar angeschlossen ist. Innerhalb der Konsoleinrichtung 10 ist im in Figur 1 linken vorderen Bereich der Konsoleinrichtung 10 ein Ablagefach 18 vorhanden.

Im unteren Seitenrandbereich des Ablagefachs 18 sind zwei in Längsrichtung beabstandet zueinander angeordnete erste Verriegelungseinrichtungen 20 vorhanden. Jede erste Verriegelungseinrichtung 20 besteht aus einer in der Wandung des Ablagefachs 18 vorhandenen L-förmigen Ausnehmung 30, die einen nach unten offenen ersten Schenkel und einen in Figur 1 nach rechts weisenden, parallel zum unteren Rand des Ablagefachs 18 verlaufenden zweiten Schenkel aufweist, und einer am Gehäuse vorhandenen Vorsprungeinheit 28, die in die L-förmige Ausnehmung 30 eingreift.

Am gegenüberliegenden oberen Längsrand sind entsprechend ebenfalls jeweils zwei in Längsrichtung beabstandete zweite Verriegelungseinrichtungen 24 vorhanden, die jeweils eine L-förmige Ausnehmung 34 am Ablagefach 18 aufweisen, die jeweils einen nach oben weisenden ersten Schenkel und einen parallel zum Rand verlaufenden in Figur 1 nach vorn weisenden zweiten Schenkel aufweisen, und an der Konsoleinrichtung 10 entsprechend angeformten Vorsprungeinheiten 32, die in die Ausnehmung 34 eingreifen.

Im Bereich der zweiten Drehachse 22 ist eine feststehende Scheibe 42 angeordnet, die eine exzentrische Kurvenführung 40 in Form einer Ausnehmung aufweist. Zwischen dieser Kurvenführung 40 und dem Ablagefach 18 ist ein Gestänge angeordnet, bestehend aus einem ersten Gelenkstab 36 und einem zweiten Gelenkstab 38. Der erste Gelenkstab 36 ist an das Ablagefach 18 angeschlossen. Das gegenüberliegende freie Ende des zweiten Gelenkstabs 38 ist in der Kurvenführung 40. geführt.

Die als Mittelarmlehne ausgebildete Konsoleinrichtung 10 beziehungsweise der Inhalt des in der Konsoleinrichtung 10 angeordneten Ablagefachs 18 ist für den Fahrer und Beifahrer zugänglich sowie auch für die im Fond sitzenden Passagiere. Die Zugänglichkeit für den Fahrer und Beifahrer wird in einfacher Art und Weise durch das Schwenken der Deckelplatte 16 erreicht (Figur 2). In dem Zustand gemäß Figur 2 ist der Inhalt des Ablagefachs 18 von oben her zugänglich.

Die Zugänglichkeit für die Fondpassagiere wird durch die nachfolgend beschriebenen Vorgänge ermöglicht.

In der in Figur 1 dargestellten Grundposition ist das Ablagefach 18 über die ersten Verriegelungseinrichtungen 20 mit der Grundplatte 12 der Konsoleinrichtung 10 fest verriegelt. Die Vorsprungeinheiten 28 hintergreifen die L-förmige Ausnehmung 30 im parallel verlaufenden Schenkel. Die zweite Vorsprungeinheit befindet sich in entriegeltem Zustand. Daher kann die Deckelplatte 16 in diesem Zustand problemlos geschwenkt werden. Soll die Zugänglichkeit für die Fondpassagiere ermöglicht werden, wird die gesamte Konsoleinrichtung 10 um die zweite Drehachse 22 um ca. 110° (Altgrad) geschwenkt, sodass sie die in Figur 3 dargestellte Zwischenposition einnimmt. Infolge des Schwenkvorgangs wird durch die exzentrische Kurvenführung 14 für das Gestänge eine Verschiebung des Ablagefachs 18 parallel zur Grundplatte 12 in das Innere der Konsoleinrichtung 10 bewirkt. Dadurch entriegeln die ersten Entriegelungseinrichtungen 20 die Verbindung zwischen Ablagefach 18 und Grundplatte 12. Gleichzeitig verriegeln die zweiten Verriegelungseinrichtungen 24, indem deren Vorsprungeinheiten 32 den parallel verlaufenden Schenkel der L-förmigen Ausnehmung 34 jeweils hintergreifen.

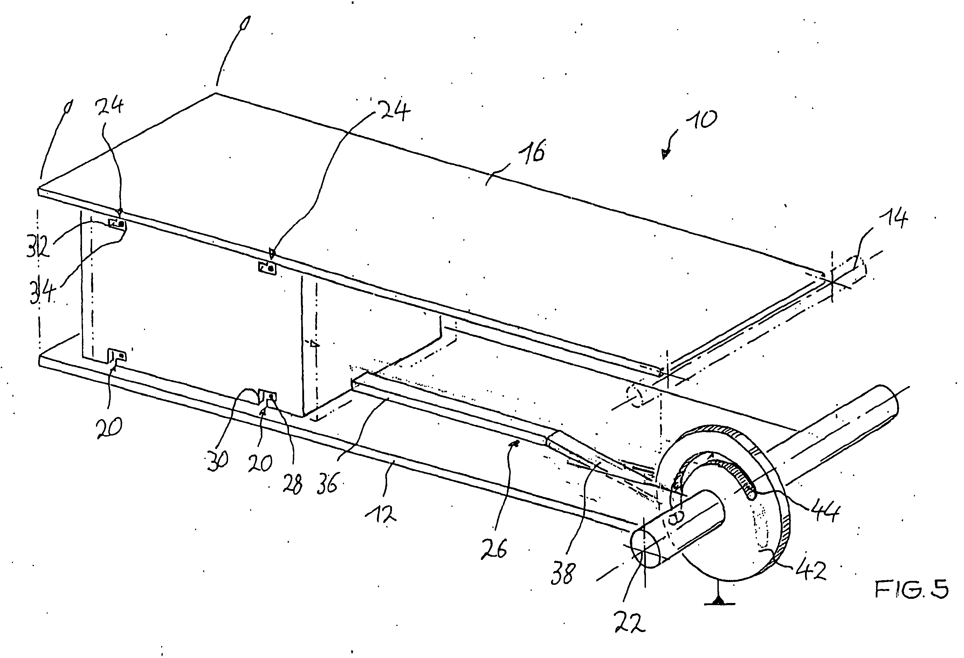

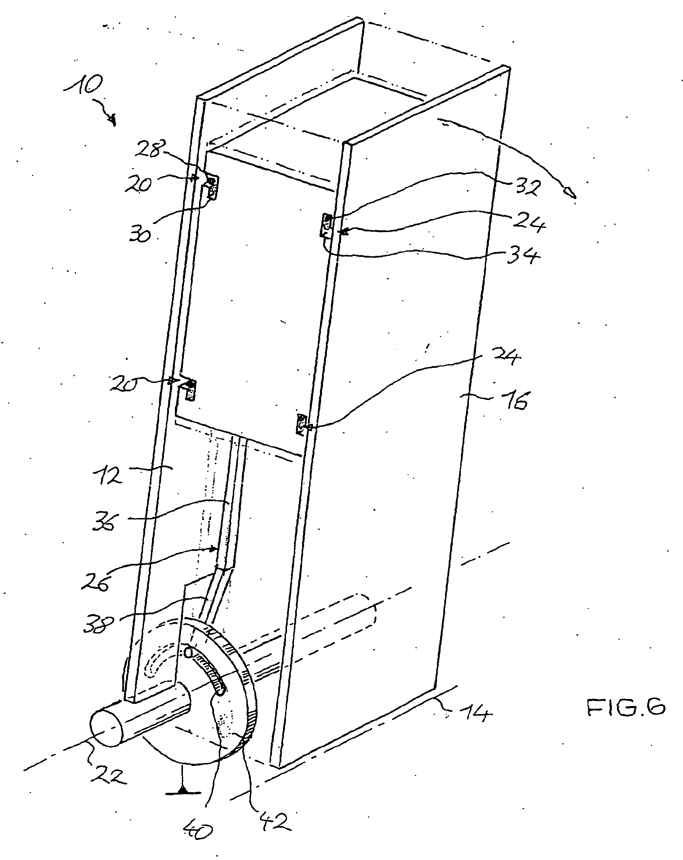

Die Grundposition und die Zwischenposition sind in den Figuren 5 und 6 in einer Detailperspektive dargestellt, wobei aus Übersichtlichkeitsgründen die Seitenwände und die Rückwand der Konsoleinrichtung 10 nicht dargestellt sind.

Nachdem die Konsoleinrichtung 10 die Zwischenposition erreicht hat, kann die Konsoleinrichtung 10 weiter um ca. 70° (Altgrad) geschwenkt werden, sodass die in Figur 4 dargestellte Endposition erreicht wird. In dieser Position ist die ursprüngliche unterseitig angeordnete Grundplatte 12 oberseitig angeordnet und das Ablagefach 18 wird für die Fondpassagiere dadurch zugänglich, dass die Grundplatte 12 in entgegengesetzter Richtung geschwenkt wird.

Das Ablagefach 18 steht unter der Wirkung eines Federelements 44, das das Ablagefach 18 nach innen drückt. Aufgrund der konstruktiven Geometrie der exzentrischen Kurvenführung 40 und dem Gestänge 46 findet in der Grundposition keine Entspannung des Federelements 44 statt. Nachdem die Konsoleinrichtung 10 in die Zwischenposition gemäß Figur 3 geschwenkt ist, hält das Federelement 44 die zweiten Verriegelungseinrichtungen 24 in verriegelungsposition.

Die dargestellten Verriegelungseinrichtungen 20, 24 stellen eine Ausführungsform möglicher Verriegelungssysteme dar. Es können konstruktiv auch andersartige Verriegelungssysteme eingesetzt werden. Diese Verriegelungssysteme müssen gewährleisten, dass in Grundposition das Ablagefach 18 an der Grundplatte 12 verankert ist und in der Zwischenposition die Verankerung zwischen Ablagefach 18 und Grundplatte 12 aufgelöst ist und dafür das Ablagefach 18 an der Deckelplatte 16 verriegelt ist.

Bevorzugt sind die Bauelemente der Konsoleinrichtung 10 als Spritzgussteile ausgebildet.

## Patentansprüche

1. Konsoleinrichtung (10), insbesondere für ein Fahrzeug, mit
- einem Gehäuse mit
- - einer Grundplatte (12) und
- - einer um eine erste Drehachse (14) drehbaren Deckelplatte (16) und
- einem Ablagefach (18), das durch Schwenken der Deckelplatte (16) um die erste Drehachse (14) oberseitig zugänglich wird,
**dadurch gekennzeichnet, dass**
- das Ablagefach (18) oberseitig und unterseitig offen zwischen der Grundplatte (12) und der Deckelplatte (16) vorhanden ist,
- eine erste Verriegelungseinrichtung (20) vorhanden ist, die das Ablagefach (18) lösbar an der Grundplatte (12) verriegelt,
- die Grundplatte (12) der Konsoleinrichtung (10) um eine zweite Drehachse (22) von einer Grundposition in eine Zwischenposition schwenkbar ist,
- eine zweite Verriegelungseinrichtung (24) vorhanden ist, die das Ablagefach (18) an der Deckelplatte (16) lösbar verriegelt,
- die erste Verriegelungseinrichtung (20) das Ablagefach (18) in der Grundposition der Konsoleinrichtung (10) mit der Grundplatte (12) verriegelt und die zweite Verriegelungseinrichtung (24) in der Grundposition der Konsoleinrichtung (10) das Ablagefach (18) mit der Deckelplatte (16) entriegelt und
- eine Kopplungseinheit (26) vorhanden ist, die bewirkt, dass beim Schwenken der Konsoleinrichtung (10) von der Grundposition in die Zwischenposition die erste Verriegelungseinrichtung (20) die Grundplatte (12) mit dem Ablagefach (18) entriegelt und die zweite Verriegelungseinrichtung (24) die Deckelplatte (16) mit dem Ablagefach (18) verriegelt, sodass beim Weiterschwenken der Konsoleinrichtung (10) um die zweite Drehachse (22) von der Zwischenposition zu einer Endposition die Grundplatte (12) obenseitig zu liegen kommt und das Ablagefach (18) durch Schwenken der Grundplatte (12) um die zweite Drehachse (22) geöffnet werden kann, wobei der Verriegelungs- und der Entriegelungsvorgang beim Zurückschwenken von der Zwischenposition zur Grundposition in umgekehrter Reihenfolge abläuft.

2. Konsoleinrichtung nach Anspruch 1,
**dadurch gekennzeichnet, dass**
der Schwenkwinkel von der Grundposition zur Zwischenposition im Bereich zwischen 100° und 120° (Altgrad) liegt.

3. Konsoleinrichtung nach Anspruch 1 oder 2,
**dadurch gekennzeichnet, dass**
der Schwenkwinkel von der Zwischenposition zur Endposition im Bereich zwischen 60° und 80° (Altgrad) liegt.

4. Konsoleinrichtung nach Anspruch 1,
**dadurch gekennzeichnet, dass**
die erste Verriegelungseinrichtung (20) zumindest eine an der Grundplatte (12) angeformte Vorsprungeinheit (28) und zumindest eine an dem unteren Rand des Ablagefachs (18) vorhandene L-förmige Ausnehmung (30) mit einem senkrecht zum unteren Rand angeordneten offenen ersten Schenkel und einen parallel zum unteren Rand angeordneten zweiten Schenkel aufweist.

5. Konsoleinrichtung nach Anspruch 1 oder 4,
**dadurch gekennzeichnet, dass**
die zweite Verriegelungseinrichtung (24) zumindest eine an der Deckelplatte (16) angeformte Vorsprungeinheit (32) und zumindest eine am oberen Rand des Ablagefachs (18) vorhandene L-förmige Ausnehmung (34) mit einem senkrecht zum oberen Rand angeordneten offenen ersten Schenkel und einem parallel zu dem oberen Rand angeordneten zweiten Schenkel aufweist.

6. Konsoleinrichtung nach Anspruch 1,
**dadurch gekennzeichnet, dass**
die erste und/oder zweite Verriegelungseinrichtung als Rasteinheit mit Rastnut und entsprechender Rastnase ausgebildet sind.

7. Konsoleinrichtung nach einem oder mehreren der vorstehenden Ansprüche,
**dadurch gekennzeichnet, dass**
die Kopplungseinheit als Gelenkgestänge mit einem ersten Gelenkstab (36) und einem zweiten Gelenkstab (38) ausgebildet ist, wobei ein Ende des ersten Gelenkstabs (36) an dem Ablagefach (18) angeschlossen ist und das gegenüberliegende Ende des zweiten Gelenkstabs (38) in einer Kurvenführung (40) geführt ist, derart, dass beim Schwenken der Konsoleinrichtung (10) von der Grundposition in die Zwischenposition und umgekehrt der erste Gelenkstab eine Verschiebung in seiner Längsrichtung erfährt, wodurch die erste verriegelungseinrichtung (20) entriegelt und die zweite zweite Verriegelungseinrichtung (24) verriegelt und umgekehrt.

8. Konsoleinrichtung nach einem oder mehreren der vorstehenden Ansprüche,
**dadurch gekennzeichnet, dass**
eine Kühleinrichtung vorhanden ist, die auf das Innere des Ablagefachs einwirkt.

9. Konsoleinrichtung nach einem oder mehreren der vorstehenden Ansprüche,
**dadurch gekennzeichnet, dass**
die Konsoleinrichtung (10) als Mittelarmlehne eines Fahrzeugs ausgebildet ist, bei der in Grundposition die Deckelplatte (16) schwenkbar ist und in um ca. 180° (Altgrad) geschwenkter Endposition die Grundplatte (12) schwenkbar ist.

10. Konsoleinrichtung nach einem oder mehreren der vorstehenden Ansprüche,
**dadurch gekennzeichnet, dass**
das Ablagefach einen separaten Deckel aufweist.

11. Konsoleinrichtung nach einem oder mehreren der vorstehenden Ansprüche 1 bis 9,
**dadurch gekennzeichnet, dass**
in der Deckelplatte ein Deckel für das Ablagefach integriert vorhanden ist.

12. Konsoleinrichtung nach Anspruch 4 und/oder 5,
**dadurch gekennzeichnet, dass**
an jeder unteren/oberen Längskante des Ablagefachs (18) zwei erste/zweite Verriegelungseinrichtungen (20, 24) vorhanden sind.

13. Konsoleinrichtung nach einem oder mehreren der vorstehenden Ansprüche,
**dadurch gekennzeichnet, dass**
das Ablagefach (18) unter der Einwirkung eines elastischen Federelements (44) steht.

## Claims

1. Console (10), particularly for a vehicle, having
- a housing with
- - a base plate (12) and
- - a cover plate (16) which is rotatable about a first axis of rotation (14), and
- a storage compartment (18) which is accessible on the top side by pivoting the cover plate (16) about the first axis of rotation (14),
**characterized in that**
- the storage compartment (18) is open on the top side and bottom side between the base plate (12) and the cover plate (16),
- there is a first locking device (20) which locks the storage compartment (18) releasably to the base plate (12),
- the base plate (12) of the console (10) can be pivoted about a second axis of rotation (22) from a basic position into an intermediate position,
- there is a second locking device (24) which locks the storage compartment (18) releasably to the cover plate (16),
- the first locking device (20) locks the storage compartment (18) to the base plate (12) in the basic position of the console (10) and the second locking device (24) unlocks the storage compartment (18) from the cover plate (16) in the basic position of the console (10), and
- there is a coupling unit (26) which has the effect that, when the console (10) is pivoted from the basic position to the intermediate position, the first locking device (20) unlocks the base plate (12) from the storage compartment (18) and the second locking device (24) locks the cover plate (16) to the storage compartment (18), so that, during further pivoting of the console (10) about the second axis of rotation (22) from the intermediate position to an end position, the base plate (12) comes to lie on the top side and the storage compartment (18) can be opened by pivoting the base plate (12) about the second axis of rotation (22), the locking operation and the unlocking operation taking place in the reverse sequence when the console is pivoted back from the intermediate position to the basic position.

2. Console according to Claim 1, **characterized in that** the pivoting angle from the basic position to the intermediate position is in the range between 100° and 120° (degrees).

3. Console according to Claim 1 or 2, **characterized in that** the pivoting angle from the intermediate position to the end position is in the range between 60° and 80° (degrees).

4. Console according to Claim 1, **characterized in that** the first locking device (20) has at least one projection unit (28) integrally formed on the base plate (12) and at least one L-shaped recess (30) which is present on the lower edge of the storage compartment (18) and has an open, first limb arranged perpendicularly to the lower edge and a second limb arranged parallel to the lower edge.

5. Console according to Claim 1 or 4 **characterized in that** the second locking device (24) has at least one projection unit (32) integrally formed on the cover plate (16) and at least one L-shaped recess (34) which is present on the upper edge of the storage compartment (18) and has an open, first limb arranged perpendicularly to the upper edge and a second limb arranged parallel to the upper edge.

6. Console according to Claim 1, **characterized in that** the first and/or second locking device are/is designed as a latching unit with latching groove and corresponding latching lug.

7. Console according to one or more of the preceding claims, **characterized in that** the coupling unit is designed as an articulated linkage with a first articulated bar (36) and a second articulated bar (38), one end of the first articulated bar (36) being connected to the storage compartment (18) and the opposite end of the second articulated bar (38) being guided in a curved guide (40) in such a manner that, when the console (10) is pivoted from the basic position into the intermediate position and vice versa, the first articulated bar undergoes a displacement in its longitudinal direction, as a result of which the first locking device (20) unlocks and the second locking device (24) locks, and vice versa.

8. Console according to one or more of the preceding claims, **characterized in that** there is a cooling device which acts on the interior of the storage compartment.

9. Console according to one or more of the preceding claims, **characterized in that** the console (10) is designed as a central armrest of a vehicle, in which the cover plate (16) can be pivoted into the basic position and the base plate (12) can be pivoted into an end position which is pivoted through approx. 180° (degrees).

10. Console according to one or more of the preceding claims, **characterized in that** the storage compartment has a separate cover.

11. Console according to one or more of the preceding Claims 1 to 9, **characterized in that** a cover for the storage compartment is integrated in the cover plate.

12. Console according to Claim 4 and/or 5, **characterized in that** there are two first/second locking devices (20, 24) on each lower/upper longitudinal edge of the storage compartment (18).

13. Console according to one or more of the preceding claims, **characterized in that** the storage compartment (18) is subjected to the action of an elastic spring element (44).

## Revendications

1. Dispositif de console (10), en particulier pour un véhicule, comprenant
- un boîtier avec
- - une plaque de base (12) et
- - une plaque de couvercle (16) pouvant tourner autour d'un premier axe de rotation (14) et
- un vide-poches (18), qui est accessible par le côté supérieur en basculant la plaque de couvercle (16) autour du premier axe de rotation (14),
**caractérisé en ce que**,
- le vide-poches (18) est disposé entre la plaque de base (12) et la plaque de couvercle (16) ouvert côté supérieur et côté inférieur,
- un premier dispositif de verrouillage (20) est présent, lequel verrouille le vide-poches (18) de façon détachable sur la plaque de base (12),
- la plaque de base (12) du dispositif de console (10) peut basculer autour d'un second axe de rotation (22) d'une position de base à une position intermédiaire,
- un deuxième dispositif de verrouillage (24) est présent, lequel verrouille de façon détachable le vide-poches (18) sur la plaque de couvercle (16),
- le premier dispositif de verrouillage (20) verrouille le vide-poches (18) dans la position de base du dispositif de console (10) avec la plaque de base (12) et le second dispositif de verrouillage (24) déverrouille dans la position de base du dispositif de console (10) le vide-poches (18) avec la plaque de couvercle (16) et
- une unité de couplage (26) est présente, laquelle a pour effet que, lors du basculement du dispositif de console (10) de la position de base à la position intermédiaire, le premier dispositif de verrouillage (20) verrouille la plaque de base (12) avec le vide-poches (18) et le second dispositif de verrouillage (24) verrouille la plaque de couvercle (16) avec le vide-poches (18), de sorte que, lors du basculement ultérieur du dispositif de console (10) autour du second axe de rotation (22) de la position intermédiaire à une position finale, la plaque de base (12) arrive au niveau du côté supérieur et le vide-poches (18) peut être ouvert par le basculement de la plaque de base (12) au-dessous du second axe de rotation (22), l'opération de verrouillage et l'opération de déverrouillage se déroulant lors du basculement retour de la position intermédiaire à la position de base dans l'ordre inversé.

2. Dispositif de console selon la revendication 1,
**caractérisé en ce que**
l'angle de basculement de la position de base à la position intermédiaire se situe dans la plage comprise entre 100° et 120° (degrés).

3. Dispositif de console selon la revendication 1 ou 2,
**caractérisé en ce que**
l'angle de pivotement de la position intermédiaire à la position finale se situe dans la plage comprise entre 60° et 80° (degrés).

4. Dispositif de console selon la revendication 1,
**caractérisé en ce que**
le premier dispositif de verrouillage (20) présente au moins une unité de saillie (28) formée sur la plaque de base (12) et au moins un évidement (30) en forme de L présent sur le bord inférieur du vide-poches (18) avec un premier angle ouvert, disposé perpendiculairement au bord inférieur, et une seconde branche disposée parallèlement au bord inférieur.

5. Dispositif de console selon la revendication 1 ou 4,
**caractérisé en ce que**
le second dispositif de verrouillage (24) présente au moins une unité de saillie (32) formée sur la plaque de couvercle (16) et au moins un évidement (34) en forme de L est présent sur le bord inférieur du vide-poches (18) avec une première branche ouverte et disposée perpendiculairement au bord supérieur et une seconde branche disposée parallèlement au bord supérieur.

6. Dispositif de console selon la revendication 1,
**caractérisé en ce que**
le premier et/ou le second dispositifs de verrouillage sont conçus comme unité d'encliquetage avec rainure d'arrêt et nez d'encliquetage approprié.

7. Dispositif de console selon l'une quelconque ou plusieurs des revendications précédentes,
**caractérisé en ce que**
l'unité de couplage est réalisée sous la forme d'une tringle articulée avec une première barre articulée (36) et une seconde barre articulée (38), une extrémité de la première barre articulée (36) étant alors raccordée au vide-poches (18) et l'extrémité opposée de la seconde barre articulée (38) étant guidée dans un guidage par came (40) de telle sorte que, lors du basculement du dispositif de console (10) de la position de base à la position intermédiaire et inversement, la première barre articulée subit un déplacement dans sa direction longitudinale, de sorte que le premier dispositif de verrouillage (20) est déverrouillé et le second dispositif de verrouillage (24) est verrouillé et inversement.

8. Dispositif de console selon l'une quelconque ou plusieurs des revendications précédentes,
**caractérisé en ce que**
un dispositif de refroidissement est présent, lequel agit sur l'intérieur du vide-poches.

9. Dispositif de console selon l'une quelconque ou plusieurs des revendications précédentes,
**caractérisé en ce que**
le dispositif de console (10) est conçu comme un accoudoir central d'un véhicule, sur lequel la plaque de couvercle (16) peut être basculée dans la position de base et la plaque de base (12) peut être basculée dans une position finale basculée d'environ 180° (degrés).

10. Dispositif de console selon l'une quelconque ou plusieurs des revendications précédentes,
**caractérisé en ce que**
le vide-poches présente un couvercle séparé.

11. Dispositif de console selon l'une quelconque ou plusieurs des revendications précédentes 1 à 9,
**caractérisé en ce que**
un couvercle pour le vide-poches est intégré dans la plaque de couvercle.

12. Dispositif de console selon la revendication 4 et/ou 5,
**caractérisé en ce que**
les deux premiers/seconds dispositifs de verrouillage (20, 24) sont présents sur chaque bord longitudinal inférieur/supérieur du vide-poches (18).

13. Dispositif de console selon l'une quelconque ou plusieurs des revendications précédentes,
**caractérisé en ce que**
le vide-poches (18) est exposé à l'effet d'un élément élastique de ressort (44).
